Europäisches Patentamt

European Patent Office

Office européen des brevets

(19)

(11) Publication number: **0 040 253**
**A1**

(12) # EUROPEAN PATENT APPLICATION

(21) Application number: **80102705.3**

(22) Date of filing: **16.05.80**

(51) Int. Cl.³: **B 60 B 7/00**
**B 60 B 27/00, F 16 N 11/00**

(43) Date of publication of application:
**25.11.81 Bulletin 81/47**

(84) Designated Contracting States:
**FR GB IT SE**

(71) Applicant: **A-T-O Inc.**
**4420 Sherwin Road**
**Willoughby, OH 44094(US)**

(72) Inventor: **August, William S.**
**1589 Morada Place**
**Altadena, CA 91001(US)**

(72) Inventor: **Vincent, Darrell M.**
**224 Inverness Place**
**Glendora, CA 91740(US)**

(74) Representative: **Wasmeier, Alfons et al,**
**Patent Attorneys A. Wasmeier H. Graf Postfach 382**
**Greflingerstrasse 7**
**D-8400 Regensburg 1(DE)**

(54) **Grease fitting for hub caps and the like.**

(57) A grease fitting readily formed of stainless steel and synthetic rubber so as to be highly resistant to salt spray and other corrosive environments. A grease fitting comprising a cup shaped member (20) with a retainer (43) positioned therein, with openings through both elements for grease flow, with a generally spherical plug (50) having a tail (52) positioned within the fitting with tail in the opening of the retainer, and with a spring (36) disposed about the plug tail for urging the plug (50) into sealing engagement with the opening (46) in the cup shaped member. A grease fitting which can be formed directly as a component of a hub cap or other component rather than as a separate unit.

FIG. 1.

EP 0 040 253 A1

# GREASE FITTING FOR HUB CAP AND THE LIKE

## BACKGROUND OF THE INVENTION

This invention relates to hub caps for vehicles and to a new and improved grease fitting which is especially adapted for use on hub caps.

A boat trailer is often submerged in the water during launching and recovery of the boat. This creates problems with the lubrication for the wheel. A wheel bearing is packed with grease. When the trailer is being towed, the bearing and grease heat up and the grease expands. This forces air and grease from the hub cap structure. Then when the trailer with hot bearings is immersed in water during boat launching, there is a sudden cooling and contraction of the grease. This tends to create a vacuum and suck water into the bearing area.

A variety of designs have been proposed for hub cap designs particularly suited for boat trailers. One such design is shown in US patent 4,106,816 and others are described in the prior art discussed in said patent. The hub cap of said patent 4,106,816 utilizes a conventional grease fitting having a threaded mounting stud for positioning through an opening in the hub cap structure and fastening in place with a nut. Several problems are encountered with the conventional grease fitting. One is the corrosion problem and it is desirable to form all the components of the hub cap of stainless steel and synthetics, such as synthetic rubber, so as to be resistant to salt spray, salt water and the like. Another problem is the expense involved in purchasing and installing a separate grease fitting. Also, the conventional grease fitting utilizes a steel ball which is forced against the inlet opening by a spring. This type of construction works satisfactorily when the interior is pressurized. However when there is a vacuum in the interior during sudden cooling, a burr on the ball or the edge of the opening or a particle of dirt in the sealing area tends to permit leakage so that moisture enters the interior of the hub cap.

Accordingly, it is an object of the present invention to provide a new and improved grease fitting which can be formed of stainless steel and synthetic rubber. Another object is to provide such a grease fitting which can be formed as an integral portion of a hub cap or other component to be lubricated.

These and other objects, advantages, features and results will more fully appear in the course of the following description.

## SUMMARY OF THE INVENTION

The grease fitting of the invention includes a cup shaped central member, a retainer fixed to the central member, with the retainer and central member having openings for grease flow therethrough, a plug disposed within the central member and preferably having an elongate tail passing through the retainer opening, and a spring positioned about the tail in engagement with the retainer urging the plug into sealing engagement with the central member opening. The plug preferably is formed of a resilient material such as synthetic rubber and has a generally spherical head for sealing engagement and a projecting tail which passes through the spring and retainer opening for general alignment.

The invention also includes a pressure relief hub cap with a housing, slidable seal and spring and the grease fitting of the invention.

## BRIEF DESCRIPTION OF THE DRAWING

Fig. 1 is a sectional view through a hub cap mounted on a vehicle and showing the presently preferred embodiment of the invention;

Fig. 2 is a sectional view taken along the line 2-2 of Fig. 1; and

Fig. 3 is an enlarged side view of the plug of the grease fitting of Fig. 1.

## DESCRIPTION OF THE PREFERRED EMBODIMENT

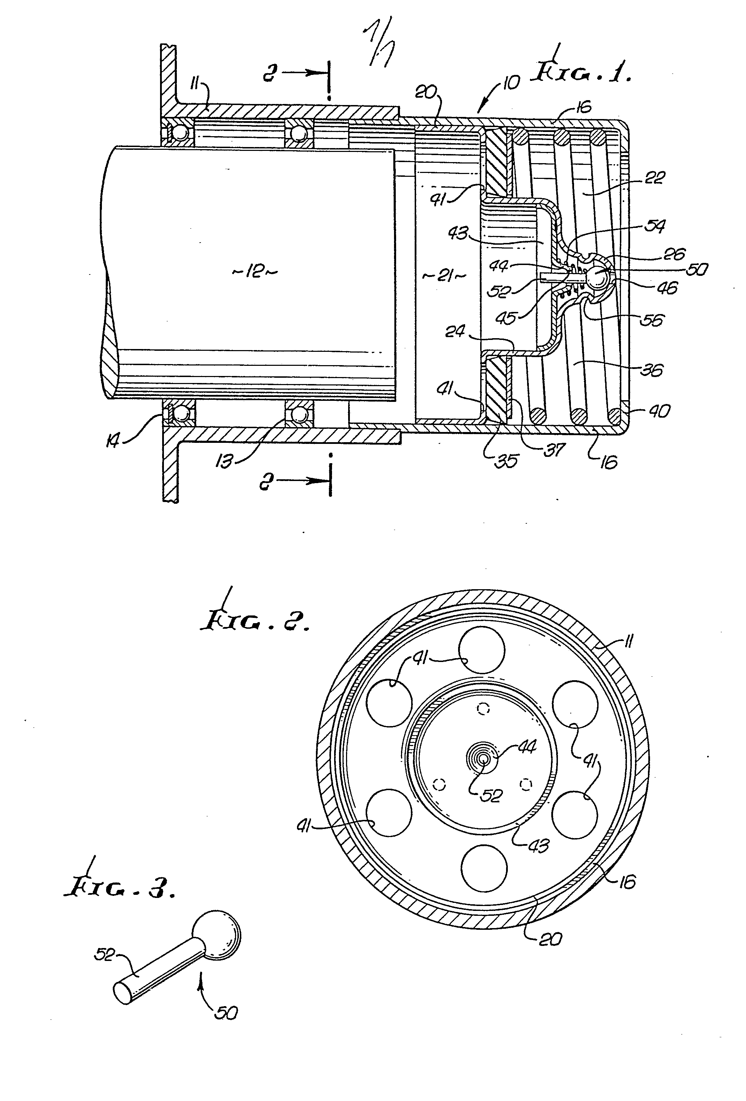

Fig. 1 shows a hub cap 10 mounted on a hub 11 of a vehicle, with the axle 12 mounted in the hub in bearings 13, 14. This is a typical installation for a hub cap on a vehicle, such as on a trailer for boats and the like. The axle and hub are shown diagrammatically in the drawing and usually will have more complex configurations, such as shown in US patent Nos. 2,657,104 and 3,785,706.

The hub cap includes a housing 16 which may be machined or drawn or cast, as desired, and which typically is a force fit into the hub 11. A central member 20 is carried within the housing 16, dividing the housing into inner zone 21 and an outer zone 22. The central member 20 may be manufactured in various manners, but preferably is drawn from a single piece of metal such as stainless steel, and may be fixed to the housing by welding. The central member has a first boss 24 which projects into the outer zone 22, and a second boss 26 which projects outward from the first boss.

A seal 35 is positioned in the outer zone 22 for sealing engagement with the inner surface of the housing 16 and the outer surface of the boss 24. A spring 36 is retained within the housing in the outer zone and urges the seal toward the central member 20, preferably with a backup ring or pad 37 positioned between the spring and the seal. The spring 36 may be retained in place by a flange 40 at the outer end of the housing 16, or by a conventional retainer ring, or by dimpling the wall of the housing, or otherwise as desired.

One or more openings 41 are provided in the central member 20 for grease flow from the inner zone 21 to the outer zone 22 when the seal 35 is moved away from the axle compressing the spring 36.

A grease fitting is built integrally into the boss 26 of the central member 20. A retainer 43 is positioned within the central member, typically being a saucer shaped piece of sheet metal having a central projection 44 with an opening 45 in line with another opening 46 in the boss 26. The retainer 43 may be fixed in place by spot welding as indicated, or by being a press fit or by cementing or otherwise as desired. The retainer is illustrated as a continuous dish, but could have a spider construction or an apertured construction or otherwise as desired.

A plug 50 is positioned within the boss 26 and has a tail 52 projecting through the opening 45 of the retainer 43. A coil spring 54 is positioned around the tail and engages the retainer, urging the plug toward the opening 46. The plug preferably has a generally spherical head and preferably is made of a resilient and corrosion resistant material such as a synthetic rubber. Preferably, an annular groove 56 is formed in the boss 26 to give the boss the same configuration as the conventional grease fitting for better engagement with a grease gun.

The operation of the grease fitting and hub cap is similar to that in the aforesaid mentioned US patent 4,106,816. The spring 54 urges the plug 50 into engagement with the boss 26 at the opening 46 to provide a seal. The spring 36 urges the seal 35 into engagement with the central member 20 closing the openings 41. A conventional grease gun may be positioned over the boss 26, with the pressure of the grease moving the plug 50 away from the opening 46 and compressing the spring 54, permitting the interior of the hub cap to be filled with grease. When the pressure within the hub builds up to a predetermined amount, as determined by the dimensions of the spring 36 and other components, the pressure acting on the seal 35 through the openings 41 will move the seal outward, compressing the spring 36. This will permit escape of grease around the boss 24 into the outer zone 22. This gives an indication of when the hub is filled and the grease gun is then removed. When sufficient grease has escaped to reduce the pressure, the spring 36 will move the seal 35 inward to seal the interior of the hub.

The seals prevent entry of water into the interior of the hub when the vehicle is immersed in water. When the bearings and grease are heated during operation on the road, the pressure generated within the hub can compress the spring 36 and permit escape of grease to reduce the pressure within the hub. The pressure within the hub acts on the plug 50 to maintain a seal at the opening 46. If a vehicle with hot hubs is immersed in water, as by launching a boat after towing, the cooling and contraction of the grease may produce a vacuum within the hub. The seal 35 in engagement with the member 20 prevents any leakage inward through the openings 41. The spring 54 will maintain the plug 50 in engagement with the opening 46 to prevent any leakage inward. It is at this time that a continuous and complete engagement between the plug 50 and the rim of the opening 46 is essential.

All of the components of the hub may be made of stainless steel, except for the resilient plug which may

0040253

be made of a synthetic rubber, thereby substantially eliminating corrosion problems. The central member 20 with the boss 24, 26 preferably is made of a single piece of sheet metal drawn to the desired configuration. The spring 54 and plug 50 are easily positioned within the boss 26 and held in place by the retainer 43 which may be spot welded in position. This construction reduces the cost of material and components and the cost of assembly, resulting in a less expensive and more reliable unit. While the grease fitting is illustrated herein as an intregal component of a hub cap, it will be understood that the grease fitting construction may be utilized in other applications as well.

We Claim:

1. In a hub cap for a vehicle wheel, the combination of:

a housing having a first open end for mounting on a vehicle and a second opposite end,

said housing including a fixed central member dividing said housing into an inner zone and an outer zone and having at least one opening for providing for grease flow between said zones,

said central member including a first boss projecting into said outer zone and a second boss projecting from said first boss;

a seal slidable in said outer zone between a first sealing position in sealing engagement with said housing and said first boss and a second non-sealing position out of engagement with said first boss;

a first spring retained in said outer zone and urging said seal toward said first position; and

a grease fitting carried in said second boss and comprising:

a retainer fixed in said central member, with said retainer and second boss having openings for grease flow therethrough,

a floating generally spherical plug disposed within said second boss, and

a second spring positioned within said second boss in engagement with said retainer urging said plug into sealing engagement with said second boss opening.

2.  A device as defined in claim 1 wherein said central member and first and second bosses are formed of a single piece of metal.

3.  A device as defined in claim 1 wherein said plug includes an elongate projecting tail passing through said retainer opening.

4.  A device as defined in claim 3 wherein said plug is formed of a resilient material.

5.  A device as defined in claim 1 wherein said retainer has an inner annular projection with the opening therein, with said second spring positioned about said projection.

6.  A device as defined in claim 5 wherein said retainer engages said central member at the junction of said first and second bosses.

7.  A device as defined in claim 6 wherein said second boss includes an annular groove between said first boss and said opening.

8.     A grease fitting comprising:

a cup shaped member;

a retainer fixed to said member, with said retainer and member having openings for grease flow therethrough;

a floating generally spherical plug disposed within said member; and

a spring positioned within said member about said tail in engagement with said retainer urging said plug into sealing engagement with said member opening.

9.     A grease fitting as defined in claim 8 wherein said member has a first cup shaped section and a second smaller cup shaped section projecting from said first section, with said sections formed of a single piece of metal.

10.     A grease fitting as defined in claim 9 wherein said second section includes an annular groove between said first section and said opening.

11.     A grease fitting as defined in claim 10 wherein said retainer has an inner annular projection with the opening therethrough, and with said spring positioned about said projection.

12.     A grease fitting as defined in claim 8 wherein said plug has an elongate projecting tail passing through said retainer opening.

13.     A grease fitting as defined in claim 12 wherein said plug is formed of a resilient material.

0040253

1/7

FIG.1.

FIG.2.

FIG.3.

European Patent Office

**EUROPEAN SEARCH REPORT**

**0040253**

Application number

EP 80 10 2705

## DOCUMENTS CONSIDERED TO BE RELEVANT

| Category | Citation of document with indication, where appropriate, of relevant passages | Relevant to claim |
|---|---|---|
| A | US - A - 4 058 185 (PLOEGER)<br>* Column 2, line 22 - column 4, line 32; figures 1,3 * | 1 |
| A | US - A - 3 955 852 (DE PUYDT)<br>* Column 1, line 45 - column 2, line 66; figures 1-5 * | 1 |
| D | US - A - 4 106 816 (AUGUST)<br>* Column 2, line 44 - column 4, line 12; figures 1-3 *<br>& FR - A - 2 395 847 | 1,2,3,5 |
| D | US - A - 2 657 104 (KAYSER)<br>* Column 3, lines 20-26; figure 1 * | 1 |
| A | CH - A - 426 534 (BALLOID)<br>* Page 2, lines 37-106; figures 2,3 * | 1 |

**CLASSIFICATION OF THE APPLICATION (Int. Cl.³)**

B 60 B 27/00
F 16 N 11/04

**TECHNICAL FIELDS SEARCHED (Int. Cl.³)**

B 60 B 27/-
        7/-
F 16 N  3/-
        11/-

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 27-08-1981 | AYITER |

EPO Form 1503.1   06.78